# EUROPÄISCHE PATENTANMELDUNG

(11) **EP 1 076 038 A2**
(43) Veröffentlichungstag der Anmeldung: **14.02.2001**
(21) Anmeldenummer: 00116348.4
(22) Anmeldetag: 28.07.2000
(51) Int. Cl.: C02F 1/46, C02F 1/48

(54) **Gerät zur elektrophysikalischen Wasserbehandlung**

(30) Priorität: 13.08.1999 DE 19938510; 31.12.1999 DE 19963950
(71) Anmelder: HANS SASSERATH & CO KG, 41352 Korschenbroich (DE)
(72) Erfinder: Hecking, Willi, 41238 Mönchengladbach (DE)
(74) Vertreter: Weisse, Jürgen, Dipl.-Phys.

(57) **Zusammenfassung**

Die Erfindung betrifft ein Gerät zur Wasserbehandlung mittels eines elektrischen Feldes mit jeweils einer in einer Behandlungskammer (14) angeordneten Anode (20) und Kathode (22). Es soll ein Gerät zur Wasserbehandlung mit erhöhtem Kristallwachstum geschaffen werden. Das wird erreicht durch eine Nachbehandlungskammer (45) mit Kathoden und Anoden (46) in welcher das Wasser zur Nachbehandlung durch ein zwischen den Kathoden und Anoden (46) erzeugbares elektrisches Feld hindurchleitbar ist und in welcher das Wasser eine gegenüber Verweildauer in der Behandlungskammer (14) erhöhte Verweildauer hat. Durch eine solche Nachbehandlungskammer (45) mit erhöhter Verweildauer des Wassers mit den Kristallkeimen in einem elektrischen Feld wird das Kristallwachstum gefördert. Die in der Behandlungskammer (14) erzeugten Kristallkeime werden in der Nachbehandlungskammer (45) einem elektrischen Feld ausgesetzt und wachsen dadurch erheblich schneller. Die Effizienz einer Behandlungskammer (14), die mit einer Nachbehandlungskammer (45) ausgestattet ist, ist daher größer, als die Effizienz einer einfachen Behandlungskammer.

## Beschreibung

### Technisches Gebiet

Die Erfindung betrifft ein Gerät zur Wasserbehandlung mittels eines elektrischen Feldes mit jeweils einer in einer Behandlungskammer angeordneten Anode und Kathode.

### Stand der Technik

Trinkwasser enthält wichtige Mineralien, unter anderem Kalzium- und Magnesiumkarbonate, die in der Summe auch als Wasserhärte bezeichnet werden. Diese Mineralien sind einerseits für die Gesundheit sehr wichtig. Sie können aber andererseits in der Trinkwasserinstallation, insbesondere bei Erwärmung, zu technischen Störungen führen.

Bei der Erwärmung, z.B. im Trinkwassererwärmer, kommt es zur Bildung von unlöslichen Kalkablagerungen, auch Kesselstein genannt. Dieser Kesselstein bildet sich auf der Warmseite der Installation. Er beeinträchtigt Wärmeübergänge. In Rohren kann Kesselstein über die Jahre zu einem Rohrinfarkt, d.h. zu einem Verschluß in der dem Trinkwassererwärmer nachgeschalteten Rohrinstallation führen.

Um solche Kalkablagerungen zu vermeiden, ist es bekannt, eine Enthärtung des Trinkwassers vorzunehmen, bei welcher die Mineralien aus dem Trinkwasser entfernt werden. Eine solche Enthärtung ist über Ionenaustausch oder Umkehrosmose möglich. Das vermeidet Kesselsteinbildung. Dafür wird aber in anderer Hinsicht die Qualität des Trinkwassers durch die Entfernung der an sich im Trinkwasser erwünschten Mineralien beeinträchtigt.

Es sind Verfahren zur Behandlung des Trinkwassers mittels sog. elektrophysikalischer Geräte bekannt, bei denen eine Kristallkeimbildung im Trinkwasser bewirkt werden soll. Die als Impfkristalle bezeichneten Kristallkeime werden im Trinkwasser mitgeführt. Die Konglomeration der Impfkristalle führt dann dazu, daß so behandeltes Trinkwasser weniger zu Ablagerungen in Rohren oder Heizelementen in Form von Kesselstein führt, während andererseits die Mineralien im Trinkwasser erhalten bleiben.

Die Behandlung mittels elektrophysikalischer Geräte erfolgt im wesentlichen nach folgendem Prinzip:

In Trinkwasser ist immer ein gewisser Teil Kohlendioxid (CO₂) gelöst. Dieses Kohlendioxid bildet mit den übrigen Bestandteilen ein Reaktionsgleichgewicht, wobei Kalziumhydrogenkarbonat Ca(HCO₃)₂ aus Kalziumkarbonat CaCO₃ gebildet wird nach der Reaktionsgleichung:

CaCO₃ + H₂O + CO₂ ⇔( Ca(HCO₃)₂

Wird das Wasser erhitzt, so entweicht CO₂ aus dem Wasser und es bildet sich Kesselstein. Man kann entsprechend der Gleichung aber auch gezielt das entsprechende Kalk-Kohlensäure-Gleichgewicht im Trinkwasser ändern.

Führt man dem Wasser Kohlensäure zu, so löst man eine Verschiebung des Gleichgewichts nach links in obiger Formel aus. Aus dem im Wasser vorliegenden Hydrogenkarbonat bilden sich Kristallisationskeime aus Kalziumkarbonat (Kalkübersättigung). Das weiter gebildete Kalziumkarbonat setzt sich dann vorzugsweise an den einmal entstandenen Kristallisationskeimen ab, d.h. die Kristallisationskeime 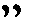 wachsen".

Diese Reaktion erfolgt in einer Behandlungskammer mit einer Katode und einer Anode auf elektrolytischem Wege. Die Kristallisationskeime oder Impfkristalle bilden sich an der Kathode. Die Impfkristalle müssen dann nach entsprechendem Wachstum wieder dem Trinkwasser beigemischt werden. Dann ist bereits Karbonat als Impfkristalle oder Kristallisationskeime im Trinkwasser vorhanden, wenn das Trinkwasser erhitzt wird. Die Impfkristalle oder Kristallisationskeime brauchen nicht mehr neu gebildet zu werden. Das Karbonat setzt sich dementsprechend vorwiegend an den im Wasser mitgeführten Impfkristallen oder Kristallisationskeimen und nicht mehr an den Installationselementen fest.

Es hat sich gezeigt, daß Impfkristalle sich in einem inhomogenen elektronischen Feld zwischen Kathode und Anode besser entwickeln können.

Aus der EP 0 751 096 A2 ist ein Gerät zur elektrophysikalischen Trinkwasserbehandlung mittels eines elektrischen Feldes bekannt, bei dem ein räumlich inhomogenes Feld mit einer einer Gleichspannung überlagerten Wechselspannung erzeugt wird.

Das Problem bei der Kristallkeimbildung in einem inhomogenen Feld ist es, daß die Verweildauer des Wassers mit den Kristallkeimen im Feld zu gering ist. Es werden zwar viele Kristallisationskeime gebildet, das Kristallwachstum an den Kristallisationskeimen ist jedoch nicht zufriedenstellend. Erhöht man den Strom durch die Elektroden um das Kristallwachstum zu fördern, so nutzen sich die Elektroden stark ab. Sie müssen dann regelmäßig ersetzt werden. Dies führt zu einem hohen Wartungsaufwand.

Durch Hintereinanderschalten mehrerer Behandlungskammern kann dieses Problem ebenfalls nicht gelöst werden. Es müssen sehr viele Behandlungskammern in Reihe geschaltet werden. Die Erzeugung eines inhomogenen elektrischen Feldes ist jedoch vergleichsweise aufwendig. Es wird auch eine Stättigung erreicht, d.h. ab einer bestimmten Anzahl an Behandlungskammern hat jede weitere Behandlungskammer keine Auswirkungen mehr auf die Effizienz der Wasserbehandlung.

### Offenbarung der Erfindung

Es ist Aufgabe der Erfindung, ein Gerät zur Wasserbehandlung mit erhöhtem Kristallwachstum zu schaffen.

Erfindungsgemäß wird diese Aufgabe gelöst durch eine Nachbehandlungskammer mit wenigstens einer Kathode und wenigstens einer Anode in welcher das Wasser zur Nachbehandlung durch ein zwischen der Kathode und der Anode erzeugbares elektrisches Feld hindurchleitbar ist und in welcher das Wasser eine gegenüber Verweildauer in der Behandlungskammer erhöhte Verweildauer hat.

Durch eine solche Nachbehandlungskammer mit erhöhter Verweildauer des Wassers mit den Kristallkeimen in einem elektrischen Feld wird das Kristallwachstum gefördert. Die in der Behandlungskammer erzeugten Kristallkeime werden in der Nachbehandlungskammer einem elektrischen Feld ausgesetzt und wachsen dadurch erheblich schneller. Die Effizienz einer Behandlungskammer, die mit einer Nachbehandlungskammer ausgestattet ist, ist daher größer, als die Effizienz einer einfachen Behandlungskammer.

Die Nachbehandlungskammer ist also vorzugsweise so aufgebaut, daß in ihr eine hohe Verweildauer bereits existierender Kristallkeime erreicht wird. Demgegenüber wird die Behandlungskammer vorzugsweise so ausgestaltet, daß möglichst viele Kristallkeime gebildet werden, wobei die Verweildauer unerheblich ist. Die Behandlungskammer ist entsprechend einer bevorzugten Ausgestaltung der Erfindung so aufgebaut, daß die Kathode eine Mehrzahl von parallelen Stiften aufweist, die auf einer Halterung sitzen, eine Lochscheibe vorgesehen ist, durch deren Löcher die Stifte der Kathode hindurchragen, und die Lochscheibe über die Länge der Stifte der Kathode verschiebbar ist. Durch eine derartige Anordnung wird ein starkes inhomogenes elektrisches Feld aufgebaut, durch welches viele Kristallkeime gebildet werden. Mit der Lochscheibe können die gebildeten Kristallkeime an den Kathodenstäben abgestreift werden. Es kann ein Elektromotor zur Verschiebung der Lochscheibe vorgesehen werden.

Mehrere Behandlungskammern sind parallel und/oder in Reihe schaltbar, zur Anpassung an Wasserdurchfluß und Effektivität der Keimbildung.

Die Nachbehandlungskammer ist vorzugsweise um die Behandlungskammer herum angeordnet und mittels Durchbrüchen in der Zwischenwand zwischen der Behandlungskammer und der Nachbehandlungskammer mit der Behandlungskammer verbunden. Dadurch kann die Erfindung bei geringen Abmessungen realisiert werden.

Die Nachbehandlungskammer ist vorzugsweise mittels paralleler Abtrennungen in mehrere Teilkammern unterteilt, wobei jeder Durchbruch in der Zwischenwand in jeweils einer Teilkammer mündet. Die parallelen Abtrennungen können von den Elektroden, vorzugsweise Graphitstäben, zur Ausbildung des elektrischen Feldes gebildet sein.

In einer bevorzugten Ausgestaltung der Erfindung sind mehrere Behandlungkammern modulartig übereinander angeordnet sind. Jede Behandlungskammer ist dann mit einem Einlaß verbunden. Die Nachbehandlungskammer ist derart in Teilkammern unterteilt, daß die Teilkammern sich über die gesamte Länge aller Behandlungskammern erstrecken und an einem Ende in einen allen Teilkammern gemeinsamen Auslaß münden. Die Durchflussrichtung durch die Behandlungskammern verläuft quer zu den Stiften an der Kathode. Diese Anordnung hat den Vorteil, daß nur ein geringer Druckabfall auftritt, da mehrere Behandlungskammern parallel geschaltet sind, die von einer gemeinsamen Nachbehandlungskammer umgeben sind.

Die Elektroden zur Ausbildung des elektrischen Feldes sind vorzugsweise in der Nachbehandlungskammer an der dem Auslaß entgegengesetzten Seite mittels eines Federdruckstiftes nach außen kontaktiert. Das hat den Vorteil, daß der Installateur beim Ein- und Ausbau des Gerätes keine elektrische Kontaktierung vornehmen muß, sondern nur den Ein- und Auslaß an das Rohrleitungssystem anschließen muß. Die elektrischen Kontakte können gemeinsam über einen gewöhnlichen Stecker mit dem Netz verbunden werden.

Wenn die Elektroden jeweils im Wechsel positiv und negativ gepolt sind, wird auf einfache Weise ein elektrisches Feld in der Nachbehandlungskammer erzeugt. Zur Vermeidung von Ablagerung an den Elektroden wird die Polung der Elektroden nach ausgewählten Zeitintervallen gewechselt.

Mulden sowohl in der Trennwand zwischen der Behandlungskammer und der Nachbehandlungskammer als auch auf der korrespondierenden Stelle in der Außenwand der Nachbehandlungskammer, welche über die Länge der Elektroden verlaufen, und in welche die Elektroden einsetzbar sind, ermöglichen das einfache Auswechseln der Elektroden ohne eine Befestigung zu lösen. Die Elektroden werden in den Mulden gehalten ohne zu verrutschen.

Ausgestaltungen der Erfindungen sind Gegenstand der Unteransprüche. Ein Ausführungsbeispiel der Erfindung ist nachstehend unter Bezugnahme auf die zugehörigen Zeichnungen näher erläutert.
- Fig.1: ist eine perspektivische Darstellung des Gerätes zur Wasserbehandlung mit der Behandlungskammer, teilweise im Schnitt.
- Fig.2: zeigt einen Querschnitt durch das Gerät zur Wasserbehandlung
- Fig.3: zeigt eine in einer Behandlungskammer angeordnete Kathode in räumlicher Darstellung
- Fig.4: zeigt eine in einer Behandlungskammer angeordnete Lochscheibe
- Fig.5: zeigt eine in einer Behandlungskammer angeordnete Kathode in Seitenansicht.
- Fig.6: zeigt die Kontaktierung der Elektroden in der Behandlungskammer
- Fig.7: zeigt die Kontaktierung der Elektroden in der Nachbehandlungskammer
- Fig.8: zeigt einen Längsschnitt durch ein Behandlungskammer-Modul

### Beschreibung eines Ausführungsbeispiels

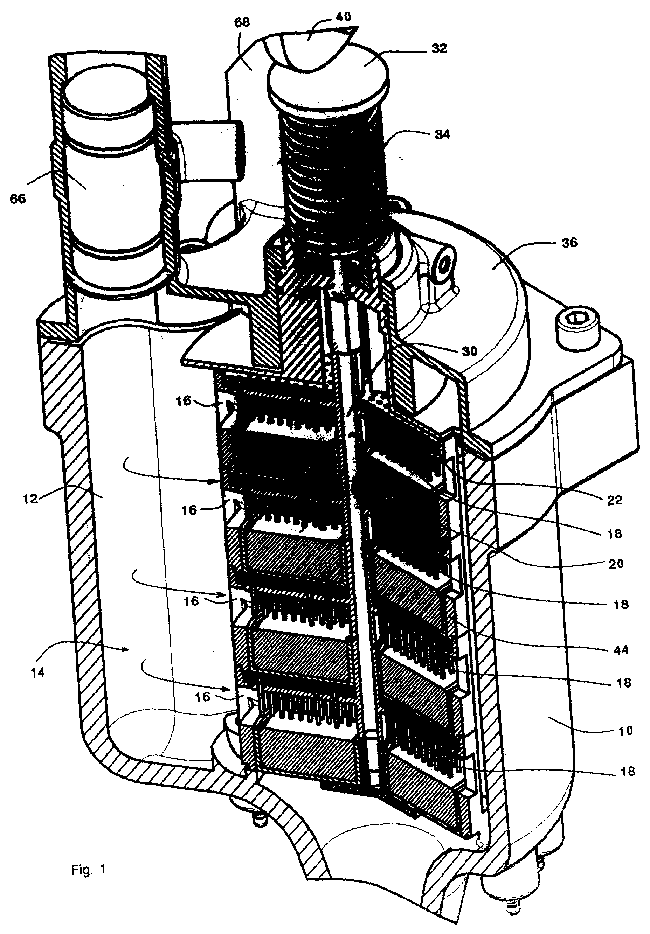

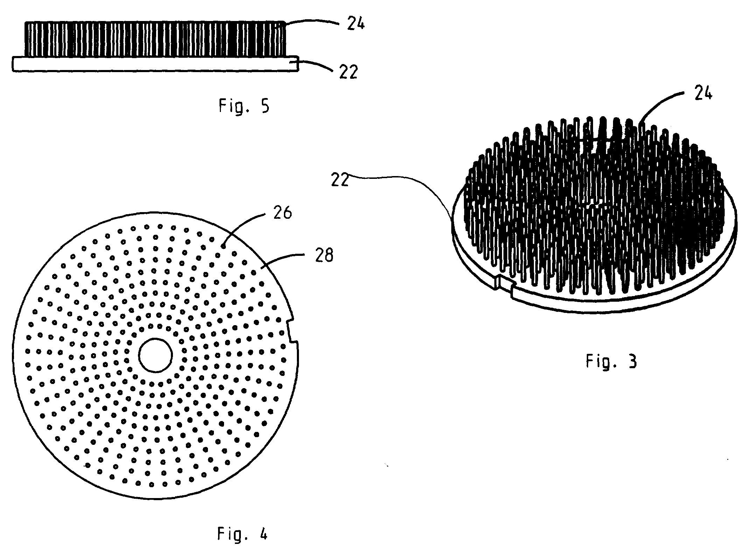

In Fig. 1 ist mit 10 ein Gerät zur Wasserbehandlung bezeichnet. Das Gerät 10 weist einen Einlaß 12 auf, der über Durchbrüche 16 mit einer Behandlungskammern 14 verbunden ist. In der Behandlungskammer 14 sitzen gleichachsig übereinander eine Mehrzahl von dynamischen Wasserbehandlungs-Einheiten 18. Jede Wasserbehandlungs-Einheit 18 besteht aus einer Anode 20 und einer Kathode 22. Die Kathode 22 besteht aus einer Ringscheibe mit einer Vielzahl von parallelen, axial zu der Ringscheibe sich erstreckenden Stiften 24. Dies ist auch noch einmal in Fig.3, Fig.4 und Fig.5 dargestellt. Die Stifte 24 ragen durch entsprechend angeordnete Löcher 26 einer Lochscheibe 28. Die Lochscheiben 28 aller Wasserbehandlungs-Einheiten 18 sind miteinander und mit einem Stößel 30 verbunden. Der Stößel 30 endet in einem Teller 32. Der Teller 32 steht unter dem Einfluß einer als Schraubenfeder ausgebildeten Druckfeder 34. Die Druckfeder 34 stützt sich an einer Grundplatte 36 des (nicht dargestellten) Armaturenteils ab, an dem das vorliegende Gerät angebracht werden soll. Die Grundplatte 36 bildet den Deckel der Behandlungskammer 14. Durch einen Nocken 40 ist der Stößel 30 gegen die Wirkung der Druckfeder 34 nach unten in Fig.1 bewegbar. Dabei gleiten die Lochscheiben 28 auf den Stiften 24 und lösen Kristallkeime ab, die sich infolge eines zwischen Kathode 22 und Anode 20 wirkenden, inhomogenen elektrischen Feldes an der Kathode 22 gebildet haben. Diese Kristallkeime werden vom Wasserstrom mitgenommen.

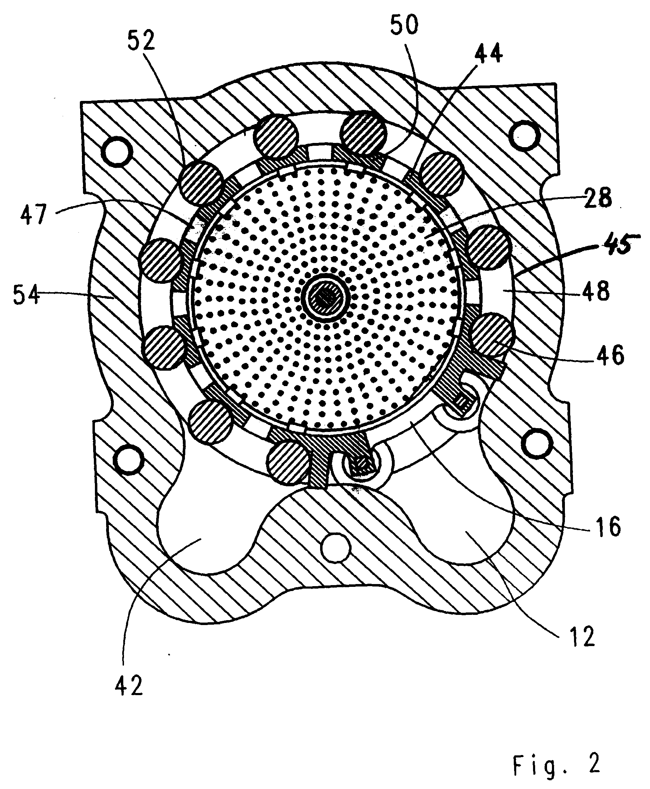

Auf dem Weg von Einlaß 12 zu einem in Fig.2 dargestellten Ausgang 42 fließt der Wasserstrom im wesentlichen quer zu den Stiften 24 zwischen diesen hindurch und jeweils zwischen Anode 20 und Kathode 22. Damit ergibt sich ein relativ langer Weg durch das inhomogene elektrische Feld und damit eine relativ lange Verweildauer in diesem Feld. Außerdem ist der Druckabfall zwischen Einlaß 12 und Auslaß 42 der Behandlungskammer 14 gering.

Der Nocken 40 sitzt auf einer Welle eines (nicht dargestellten) elektrischen Stell- oder Antriebsmotors. Durch den Stell- oder Antriebsmotor werden über den Nocken 40 und den Stößel 30 (Fig.1) die Lochscheiben 28 periodisch nach unten über die Stifte 24 bewegt.

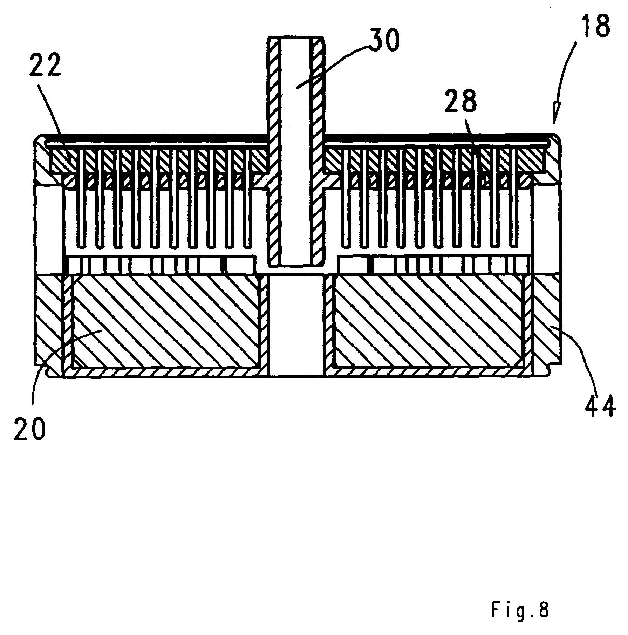

Wie in Fig.2 und Fig.8 dargestellt ist, wird eine Wasserbehandlungs-Einheit 18 von einer Wand 44 aus Kunststoff begrenzt. Die Wand 44 bildet eine Zwischenwand zu einer um die Behandlungskammer herum angeordneten Nachbehandlungskammer 45. Die Nachbehandlungskammer 45 ist von zylindrischen Graphitelektroden 46 in mehrere Teilkammern 48 unterteilt. In der vorliegenden Ausführungsform besteht die Nachbehandlungskammer aus neun Teilkammern 48. Die Verbindung zwischen der Behandlungskammer und den Teilkammern 48 der Nachbehandlungskammer wird jeweils über Durchbrüche 47 hergestellt. Die Elektroden 46 sitzen lose in Mulden 50 und 52 die auf jeweils gegenüberliegenden Seiten in der Trennwand und in einem äußeren Mantel 54 vorgesehen sind. Der äußere Mantel 54 bildet ebenfalls eine Begrenzungswand der Nachbehandlungskammer 45. Durch die Mulden 50 bzw. 52 sind die Elektroden 46 fest in ihrer Position gehalten und können nicht verrutschen. Die Elektroden benötigen somit keine weitere Befestigung und können leicht ausgetauscht werden.

Die Elektroden 46 sind abwechselnd positiv und negativ gepolt. Dadurch bildet sich ein nicht besonders inhomogenes Feld aus, dessen Feldlinien senkrecht zu den Elektroden und in etwa parallel zur Zwischenwand 44 verlaufen. In diesem Feld wird das Wasser mit den Kristallkeimen einer Nachbehandlung ausgesetzt. Um zu vermeiden, daß sich nach einer gewissen Zeit die Kristallkeime an den Elektroden 46 absetzen, wird die Polung in kurzen Zeitabständen gewechselt. Jede Elektrode bildet also einmal eine Anode und einmal eine Kathode.

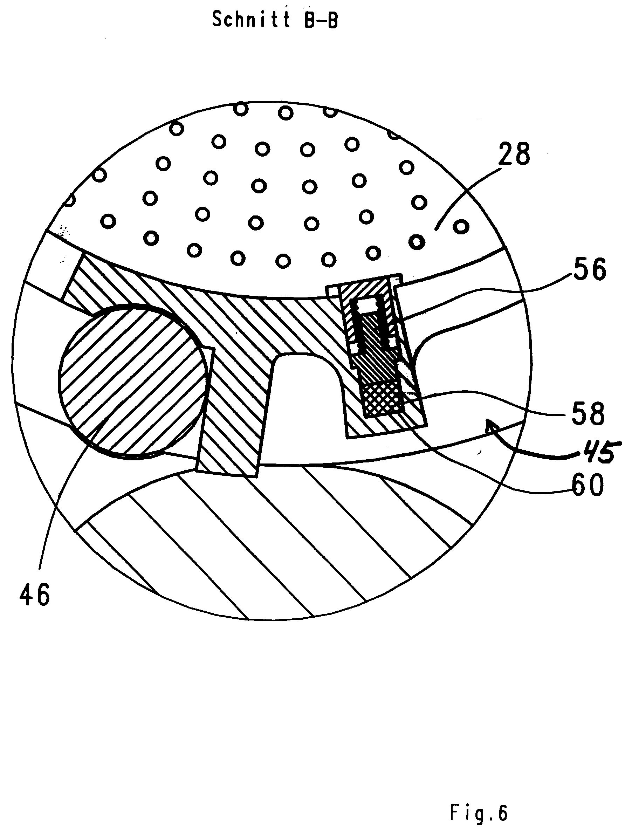

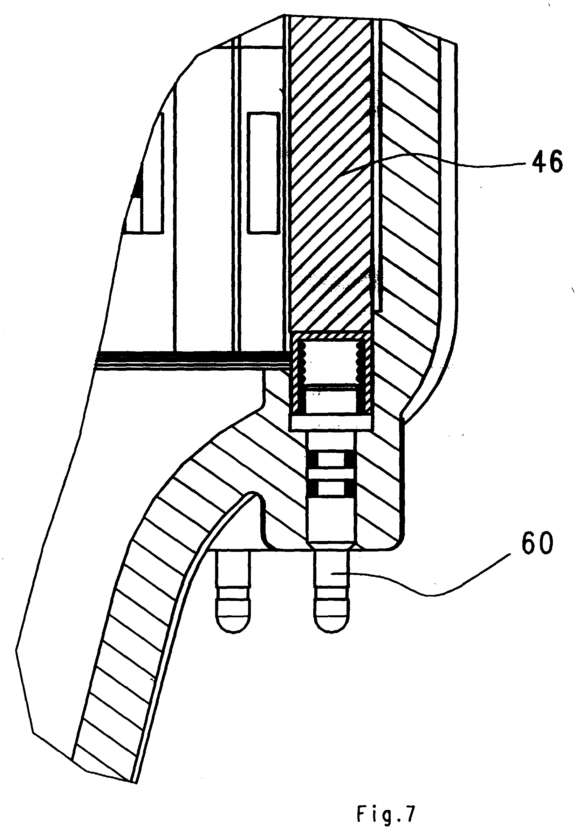

Die Kontaktierung der Elektroden ist in Fig.6 und Fig.7 dargestellt.

In Fig.1 ist eine Spannung an eine Kontaktleiste 58 von rechteckigem Querschnitt angelegt, die in einer entsprechend rechteckigen Ausnehmung 60 der Trennwand 44 sitzt. Die Kontaktleiste 58 und die Ausnehmung erstrecken sich axial über die gesamte Länge der isolierenden, aus Kunststoff bestehenden Trennwand längs aller Wasserbehandlungs-Einheiten 18 (Fig. 1). Neben jeder Kathode 22 der Wasserbehandlungs-Einheiten 18 hat die Trennwand eine radiale Stufenbohrung, die in der rechteckigen Ausnehmung mündet.

In dieser Stufenbohrung sitzt ein elektrisch leitendes Kontaktstück 56, das an der Kontaktleist 58 anliegt. Das Kontaktstück 56 hat eine Basis, welche die Kontaktleiste kontaktiert, einen Flansch und einen der Kathode 22 zugewandten zentralen Vorsprung von vermindertem Durchmesser. Ein elektrisch leitendes Druckstück ist in dem kathodenseitigen, erweiterten Teil der Bohrung. Eine als Schraubenfeder ausgebildete Druckfeder, die den zentralen Vorsprung des Kontaktstücks 56 umgibt, stützt sich an dem Flansch des Kontaktstücks 56 ab und drückt das Druckstück in Anlage an der Kathode 22.

In ähnlicher Weise erfolgt die Kontaktierung der Elektroden 46, die in Fig.7 dargestellt ist,

Die isolierende Außenwandung 54 des Gerätes weist Stufenbohrungen auf, die mit dem von den beiden Mulden 50 und 52 bestimmten Zylinder und damit mit den Elektroden 46 fluchten. In jeder dieser Stufenbohrungen sitzt ein elektrisch leitendes Kontaktstück 60. Das Kontaktstück 60 weist eine Basis mit einem axialen Ansatz auf, der aus der Stufenbohrung herausragt, einen Flansch, der an der Schulter zwischen dem engeren und dem weiteren Teil der Stufenbohrung anliegt und einen inneren Vorsprung von geringerem Durchmesser. Ein topfförmiges, elektrisch leitendes Druckstück greift über diesen inneren Vorsprung. Eine Schraubenfeder umgibt den inneren Vorsprung und drückt das Druckstück in Anlage an der Stirnfläche der zylindrischen Elektrode. An den äußeren Ansatz wird eine Spannung angelegt.

Das beschriebene Gerät arbeitet wie folgt:

Aus der Wasserleitung strömt das Wasser über den Rohrstutzen 66 zum Einlaß 12 der Behandlungskammer 14. Der Einlaß 12 wird von einer in Fig. 1 senkrecht verlaufenden Rohrleitung gebildet. Durch einen Durchbruch 16 tritt das Wasser in eine der Wasserbehandlungs-Einheiten 18 ein. Das Wasser strömt unter Bildung von Kristallisationskeimen durch die Wasserbehandlungs-Einheiten 18. Es tritt durch die Durchbrüche 47 in die Teilkammern 48 der Nachbehandlungskammer. Dort fließt es in vertikaler Richtung (Fig.1) und ist dem elektrischen Feld ausgesetzt, das von den Elektroden 46 erzeugt wird. Dabei wachsen die in den Behandlungskammern gebildeten Kristallkeime und verringern so den Gehalt an gelöstem Karbonat im Wasser.

Das Wasser verläßt die Teilkammern 48 der Nachbehandlungskammer an ihrem - in Fig.1 - oberen Ende und gelangt in den Auslaß 42, der mit einem Rohrstutzen 68 verbunden ist. Dieser Rohrstutzen 68 stellt die Verbindung mit dem Netz her.

## Patentansprüche

**1.** Gerät zur Wasserbehandlung (10) mittels eines elektrischen Feldes mit jeweils einer in einer Behandlungskammer (14) angeordneten Anode (20) und Kathode (22), **gekennzeichnet durch** eine Nachbehandlungskammer mit wenigstens einer Kathode (46) und wenigstens einer Anode (46) in welcher das Wasser zur Nachbehandlung durch ein zwischen der Kathode und der Anode erzeugbares elektrisches Feld hindurchleitbar ist und in welcher das Wasser eine gegenüber Verweildauer in der Behandlungskammer erhöhte Verweildauer hat.

**2.** Gerät zur Wasserbehandlung (10) nach Anspruch 1, **dadurch gekennzeichnet, daß**
(a) die Kathode (22) eine Mehrzahl von parallelen Stiften (24) aufweist, die auf einer Halterung sitzen,
(b) eine Lochscheibe (28) vorgesehen ist, durch deren Löcher (26) die Stifte (24) der Kathode (22) hindurchragen, und
(c) die Lochscheibe (28) über die Länge der Stifte (24) der Kathode (22) verschiebbar ist.

**3.** Gerät zur Wasserbehandlung (10) nach Anspruch 2, **gekennzeichnet durch** einen Elektromotor zur Verschiebung der Lochscheibe (28).

**4.** Gerät zur Wasserbehandlung (10) nach einem der vorgehenden Ansprüche, **dadurch gekennzeichnet,** daß mehrere Behandlungskammern (14) in Reihe schaltbar sind.

**5.** Gerät zur Wasserbehandlung (10) nach einem der vorgehenden Ansprüche, d**adurch gekennzeichnet daß** mehrere Behandlungskammern (14) parallelschaltbar sind.

**6.** Gerät zur Wasserbehandlung (10) nach einem der vorgehenden Ansprüche, **dadurch gekennzeichnet, daß** die Nachbehandlungskammer um die Behandlungskammer herum angeordnet und mittels Durchbrüchen (47) in der Zwischenwand (44) zwischen der Behandlungskammer (14) und der Nachbehandlungskammer mit der Behandlungskammer (14) verbunden ist.

**7.** Gerät zur Wasserbehandlung (10) nach Anspruch 6, **dadurch gekennzeichnet, daß** die Nachbehandlungskammer mittels paralleler Abtrennungen (46) in mehrere Teilkammern (48) unterteilt ist, wobei jeder Durchbruch (47) in der Zwischenwand (44) in jeweils einer Teilkammer (48) mündet.

**8.** Gerät zur Wasserbehandlung (10) nach Anspruch 7, **dadurch gekennzeichnet, daß** die parallelen Abtrennungen von den Elektroden (46) zur Ausbildung des elektrischen Feldes gebildet sind.

**9.** Gerät zur Wasserbehandlung (10) nach Anspruch 8, **dadurch gekennzeichnet, daß** die Elektroden (46) von Graphitstäben gebildet sind.

**10.** Gerät zur Wasserbehandlung (10) nach Anspruch 8 oder 9, **dadurch gekennzeichnet, daß** mehrere Behandlungkammern (14) modulartig übereinander angeordnet sind

**11.** Gerät zur Wasserbehandlung (10) nach Anspruch 10, **dadurch gekennzeichnet, daß** jede Behandlungskammer (14) mit einem Einlaß (16) verbunden ist und die Nachbehandlungskammer derart in Teilkammern (48) unterteilt ist, daß die Teilkammern (48) sich über die gesamte Länge aller Behandlungskammern (14) erstrecken und an einem Ende in einen allen Teilkammern (48) gemeinsamen Auslaß (42) münden.

**12.** Gerät zur Wasserbehandlung (10) nach Anspruch 11, **dadurch gekennzeichnet, daß** die Durchflussrichtung durch die Behandlungskammern (14) quer zu den Stiften (24) an der Kathode (22) verläuft.

**13.** Gerät zur Wasserbehandlung (10) nach einem der Ansprüche 9 bis 12, **dadurch gekennzeichnet, daß** die Elektroden (46) zur Ausbildung des elektrischen Feldes in der Nachbehandlungskammer an der dem Auslaß (42) entgegengesetzten Seite mittels eines Federdruckstiftes (60) nach außen kontaktiert sind.

**14.** Gerät zur Wasserbehandlung (10) nach einem der Ansprüche 8 bis 13, **dadurch gekennzeichnet, daß** die Elektroden (46) jeweils im Wechsel positiv und negativ gepolt sind.

**15.** Gerät zur Wasserbehandlung (10) nach Anspruch 14, **dadurch gekennzeichnet, daß** die Polung der Elektroden (46) nach ausgewählten Zeitintervallen umpolbar ist.

**16.** Gerät zur Wasserbehandlung (10) nach einem der Ansprüche 10 bis 15, **dadurch gekennzeichnet, daß** Mulden (50, 52) sowohl in der Trennwand (44) zwischen der Behandlungskammer (14) und der Nachbehandlungskammer als auch auf der korrespondierenden Stelle in der Außenwand (54) der Nachbehandlungskammer vorgesehen sind, welche über die Länge der Elektroden (46) verlaufen, und in welche die Elektroden (46) einsetzbar sind.

**16.** Verfahren zur elektrophysikalischen Wasserbehandlung von Trinkwasser, bei welchem das Trinkwasser in einer Behandlungskammer (46) einem elektrischen Feld ausgesetzt wird, **dadurch gekennzeichnet, daß** das Wasser nachbehandelt wird, indem es bei gegenüber der Verweildauer in der Behandlungskammer erhöhter Verweildauer in ein weiteres elektrisches Feld geleitet wird..
